# EUROPÄISCHE PATENTANMELDUNG

(11) **EP 3 905 469 A1**
(43) Veröffentlichungstag der Anmeldung: **03.11.2021**
(21) Anmeldenummer: 21171272.4
(22) Anmeldetag: 29.04.2021
(51) Int. Cl.: H02J 1/10, H02J 4/00

(54) **STELLANTRIEB**

(30) Priorität: 30.04.2020 DE 102020111843
(71) Anmelder: AUMA Riester GmbH & Co. KG, 79379 Müllheim (DE)
(72) Erfinder: HOFMANN, Benjamin, 79423 Heitersheim (DE); GIRIT, Erdem, 79102 Freiburg (DE)
(74) Vertreter: Mertzlufft-Paufler, Cornelius

(57) **Zusammenfassung**

Ein Stellantrieb (1) mit einem Antriebsmotor (3), einer Steuereinheit (2) und einer primären Energieversorgung (5), ist dadurch gekennzeichnet, dass die primäre Energieversorgung (5) zur Versorgung der Steuereinheit (2) dient und dass der Stellantrieb (1) eine sekundäre Energieversorgung (7) zur Versorgung des Antriebsmotor (3) besitzt. Die sekundäre Energieversorgung (7) ist beispielsweise durch einen Energiespeicher (4) gebildet, der über die primäre Energieversorgung (5) aufladbar ist oder durch einen Netzanschluss (12). Der Stellantrieb (1) kann einteilig oder zweiteilig ausgebildet sein.

## Beschreibung

Die Erfindung betrifft einen Stellantrieb mit einem Antriebsmotor, einer Steuereinheit und einer primären Energieversorgung.

Bei solchen Stellantrieben ist es üblich, dass die primäre Energieversorgung über einen Drehstromanschluss erfolgt, der genug Leistung zur Versorgung des Antriebsmotors bereitstellt. Die Energieversorgung der Steuereinheit mit einer Gleichspannung erfolgt dann beispielsweise durch ein Netzteil aus der primären Energieversorgung. Alternativ ist es auch bekannt, dass die primäre Energieversorgung über eine 24 V Gleichspannung erfolgt, wobei hierbei der Stellantrieb mit dieser Gleichspannung betrieben wird.

Die Erfindung hat die Aufgabe den Aufwand zur Energieversorgung eines Stellantriebs zu verringern.

Diese Aufgabe wird erfindungsgemäß durch einen Stellantrieb mit den Merkmalen des Anspruch 1 gelöst.

Der erfindungsgemäße Stellantrieb ist demnach dadurch gekennzeichnet, dass die primäre Energieversorgung zur Versorgung der Steuereinheit dient, wobei die Leistung der primären Energieversorgung geringer ist als die Nennleistung des Antriebsmotors und dass der Stellantrieb eine sekundäre Energieversorgung zur Versorgung des Antriebsmotor besitzt.

Auf diese Weise kann ein Netzteil zur Versorgung der Steuereinheit mit einer Betriebsspannung entfallen, so dass der Stellantrieb einfacher aufgebaut ist.

In einer Ausführung weist der Stellantrieb als primäre Energieversorgung einen Anschluss für eine Steuerleitung, einen Feldbus, und/oder eine Photovoltaikanlage auf. Auf diese Weise kann insbesondere die Steuereinheit aus einer Steuerleitung, oder einer Energiequelle gespeist sein, die nur eine geringe Leistung besitzt.

In einer Ausführung weist der Stellantrieb wenigstens einen Energiespeicher auf, der über die primäre Energieversorgung aufladbar ist.

Der Energiespeicher kann zur Unterstützung der primären Energieversorgung dienen, insbesondere, wenn die primäre Energieversorgung durch eine Energiequelle mit schwankender Leistung erfolgt, wie beispielsweise eine Solarzelle. Der Energiespeicher kann dabei Zeiten mit wenig oder keiner Sonneneinstrahlung überbrücken.

In einer Ausführung dient der Energiespeicher als sekundäre Energieversorgung für den Antriebsmotor. Da der Antriebsmotor eines Stellantriebs in der Regel nur selten bewegt wird, steht dem Energiespeicher genug Zeit zur Verfügung, um aus einer leistungsschwachen primären Energieversorgung aufgeladen zu werden. Der Energiespeicher kann genug Kapazität besitzen, um auch sehr hohe Energien für den Antriebsmotor, zumindest für eine kurze Zeit zur Verfügung zu stellen. Auf diese Weise kann ein Stellantrieb vollständig an der primären Energieversorgung betrieben werden, deren Dauerleistung und Spitzenleistung geringer ist als die Nennleistung des Antriebsmotors.

Auf diese Weise kann der Motor beispielsweise aus einer Datenbusleitung versorgt sein oder aus einer Leitung, wie beispielsweise einem Photovoltaikanschluss, bei der nicht die eigentlich erforderliche Nennleistung verfügbar ist.

Dies kann insbesondere Vorteilhaft sein, wenn ein Stellantrieb an entfernten oder entlegenen Orten ohne Stromnetz betrieben werden soll.

In einer Ausführung weist der Stellantrieb als sekundäre Energieversorgung einen Netzanschluss, insbesondere einen Starkstrom- oder Drehstromanschluss, auf. Auf diese Weise kann die Versorgung der Steuereinheit beispielsweise aus einem Datenbus erfolgen, so dass auf ein Netzteil für die Steuereinheit verzichtet werden kann. Gleichzeitig erfolgt die Versorgung des Antriebsmotors davon unabhängig an einer Leitung, die die benötigte Nennleistung dauerhaft zur Verfügung stellt. Dies kann insbesondere vorteilhaft sein, wenn ein Stellantrieb häufig bewegt werden muss.

In einer Ausführung ist der Stellantrieb zweiteilig ausgebildet. Dabei ist in einem ersten Teil zumindest die Steuereinheit und die primäre Energieversorgung angeordnet und in einem zweiten Teil ist der Antriebsmotor angeordnet. Auf diese Weise kann beispielsweise ein flexiblerer Aufbau erreicht werden.

In einer Ausführung ist die sekundäre Energieversorgung in dem zweiten Teil angeordnet. Diese kann dabei sowohl ein Netzanschluss oder ein Energiespeicher sein. Das erste Teil und das zweite Teil sind in dieser Ausführung über eine Steuerleitung miteinander verbunden. Wenn die sekundäre Energieversorgung ein Energiespeicher ist, kann dieser aus der Steuerleitung, also der primären Energieversorgung des ersten Teils, aufladbar sein.

In einer alternativen Ausführung ist die sekundäre Energieversorgung in dem ersten Teil angeordnet und das erste Teil und das zweite Teil sind über eine Motoranschlussleitung miteinander verbunden. Auch bei dieser Ausführung kann die sekundäre Energieversorgung ein Netzanschluss oder ein Energiespeicher sein.

Der Energiespeicher kann beispielsweise ein beliebiger Akkumulator, etwa ein Bleiakkumulator, ein Kondensator, etwa ein Super-Cap, oder ein anderer Energiespeicher sein.

In einer vorteilhaften Ausführung ist der Energiespeicher als Nickel Metallhydrid (NiMH) Akkumulator ausgebildet. Auf diese Weise ist eine spezielle Zertifizierung nicht notwendig.

Die Erfindung ist nachfolgend anhand von Ausführungsbeispielen mit Bezug auf die beiliegenden Zeichnungen näher erläutert.

Es zeigt:
- Fig. 1:: einen einteiligen Stellantrieb mit einem Energiespeicher als sekundäre Energieversorgung und
- Fig. 2:: einen zweiteiligen Stellantrieb mit einem Netzanschluss im zweiten Teil als sekundäre Energieversorgung.

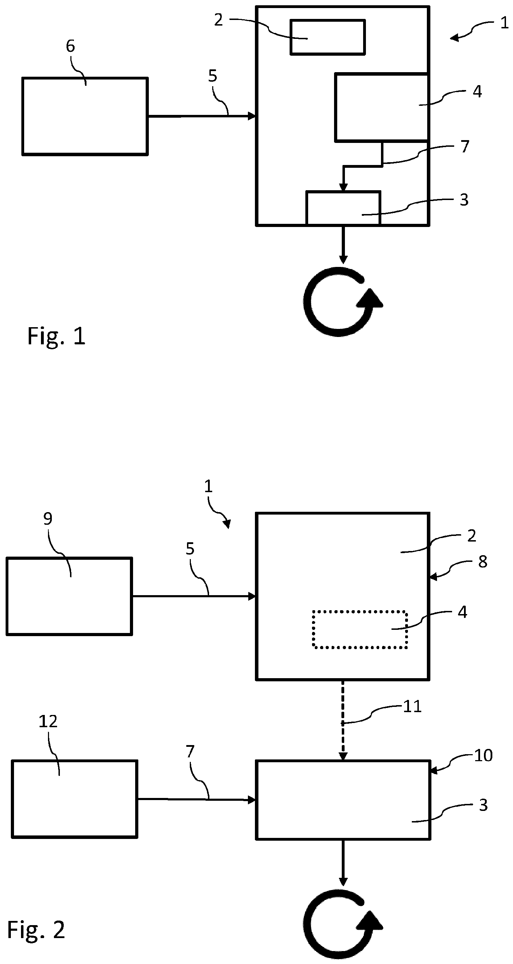

Die Fig. 1 zeigt einen einteiligen Stellantrieb 1 mit einer Steuereinheit 2, einem Antriebsmotor 3, einem Energiespeicher 4 und einer primären Energieversorgung 5.

Die primäre Energieversorgung 5 ist beispielsweise ein Feldbus 6. Sie kann jedoch auch eine andere Steuerleitung, ein Datenbus oder eine Photovoltaikanlage sein.

Die primäre Energieversorgung 5 ist dabei ausreichend, um die Steuereinheit 2 zu versorgen, besitzt jedoch eine geringere Leistung als die Nennleistung des Antriebsmotor 3. Als sekundäre Energieversorgung 7 für den Antriebsmotor 3 dient in dieser Ausführung der Energiespeicher 4.

Der Energiespeicher 4 ist vorzugsweise ein Nickel Metallhydrid Akkumulator. Er kann jedoch auch ein anderer beliebiger Energiespeicher 4 sein, beispielsweise ein Bleiakkumulator oder ein Kondensator, etwa ein Super- oder Ultra-Cap.

Der Energiespeicher 4 wird über die primäre Energieversorgung 5 aufgeladen. Vorzugsweise ist der Energiespeicher 4 derart dimensioniert, dass der Stellantrieb 1 zumindest eine, bevorzugt zwei, vollständige Stellwege fahren kann. Dadurch ist sichergestellt, dass der Stellantrieb 1 zumindest einmal öffnen und wieder schließen kann. Darüber hinaus ist es über den Energiespeicher 4 möglich eine wesentlich höhere Leistung an den Antriebsmotor 3 zu liefern als die primäre Energieversorgung 5 bereitstellt.

Die Fig. 2 zeigt einen zweiteiligen Stellantrieb 1. In einem ersten Teil 8 ist eine Steuereinheit 2 und ein optionaler Energiespeicher 4 angeordnet. Die primäre Energieversorgung 5 erfolgt hier über eine Photovoltaikanlage 9. Sie kann jedoch auch über eine Datenleitung oder einen Steuerbus erfolgen.

Der Energiespeicher 4 dient hier nur zur Unterstützung der primären Energieversorgung 5, insbesondere zum Abpuffern von Spannungsspitzen und zum Ausgleichen von Spannungsschwankungen, die beispielsweise durch Abschattung der Photovoltaikanlage 9 entstehen können.

In einem zweiten Teil 10 ist der Antriebsmotor 3 angeordnet. Der erste Teil 8 und der zweite Teil 10 sind über eine Steuerleitung 11 miteinander verbunden.

Der zweite Teil 10 besitzt eine sekundäre Energieversorgung 7, die im Beispiel durch einen Drehstromanschluss 12 gebildet ist. Dieser liefert ausreichend Leistung, um den Antriebsmotor 3 zu betreiben. Jedes der beiden Teile kann beispielsweise in einem separaten Gehäuse angeordnet sein.

Neben den beiden gezeigten Ausführungen sind weitere Anordnungen denkbar. Beispielsweise könnte die Ausführung der Fig. 2 auch einteilig ausgebildet sein. Es könnte auch die Ausführung der Fig. 1 zweiteilig ausgebildet sein, wobei der Energiespeicher 4 in dem ersten Teil 8 oder dem zweiten Teil 10 angeordnet sein. Der Stellantrieb 1 kann auch mehrere Teile aufweisen. Insbesondere kann der Energiespeicher 4 als separates Teil ausgebildet sein, der leicht austauschbar ist.

Die Anmeldung ist daher in keiner Weise auf die gezeigten Ausführungen beschränkt.

### Bezugszeichenliste

1 Stellantrieb
2 Steuereinheit
3 Antriebsmotor
4 Energiespeicher
5 primäre Energieversorgung
6 Feldbus
7 sekundäre Energieversorgung
8 erster Teil
9 Photovoltaikanlage
10 zweites Teil
11 Steuerleitung
12 Drehstromanschluss

## Patentansprüche

1. Stellantrieb (1) mit einem Antriebsmotor (3), einer Steuereinheit (2) und einer primären Energieversorgung (5), **dadurch gekennzeichnet, dass** die primäre Energieversorgung (5) zur Versorgung der Steuereinheit (2) dient, wobei die Dauerleistung der primären Energieversorgung (5) geringer ist als die Nennleistung des Antriebsmotors (3), und dass der Stellantrieb (1) eine sekundäre Energieversorgung (7) zur Versorgung des Antriebsmotors (3) besitzt.

2. Stellantrieb (1) nach Anspruch 1, **dadurch gekennzeichnet, dass** der Stellantrieb (1) als primäre Energieversorgung (5) einen Anschluss für eine Steuerleitung, einen Feldbus (6), und/oder eine Photovoltaikanlage (9) aufweist.

3. Stellantrieb (1) nach Anspruch 1 oder 2, **dadurch gekennzeichnet, dass** der Stellantrieb (1) wenigstens einen Energiespeicher (4) aufweist, der über die primäre Energieversorgung (5) aufladbar ist.

4. Stellantrieb (1) nach Anspruch 3, **dadurch gekennzeichnet, dass** der Energiespeicher (4) zur Unterstützung der primären Energieversorgung (5) dient.

5. Stellantrieb (1) nach einem der Ansprüche 3 oder 4, **dadurch gekennzeichnet, dass** der Energiespeicher (4) wenigstens einen Akkumulator, insbesondere einen Nickel Metallhydrid (NiMH) Akkumulator, aufweist.

6. Stellantrieb (1) nach einem der Ansprüche 3 bis 5, **dadurch gekennzeichnet, dass** der Energiespeicher als sekundäre Energieversorgung für den Antriebsmotor dient.

7. Stellantrieb (1) nach einem der Ansprüche 1 bis 5, **dadurch gekennzeichnet, dass** der Stellantrieb (1) als sekundäre Energieversorgung (7) einen Netzanschluss, insbesondere einen Starkstrom- oder Drehstromanschluss (12), aufweist.

8. Stellantrieb (1) nach einem der Ansprüche 1 bis 7, **dadurch gekennzeichnet, dass** der Stellantrieb (1) zweiteilig ausgebildet ist, dass in einem ersten Teil (8) zumindest die Steuereinheit (2) und die primäre Energieversorgung (5) angeordnet ist und dass in einem zweiten Teil (10) der Antriebsmotor (3) angeordnet ist.

9. Stellantrieb (1) nach Anspruch 8, **dadurch gekennzeichnet, dass** die sekundäre Energieversorgung (7) in dem zweiten Teil (10) angeordnet ist und dass das erste Teil (8) und das zweite Teil (10) über eine Steuerleitung (11) miteinander verbunden sind oder dass die sekundäre Energieversorgung (7) in dem ersten Teil (8) angeordnet ist und dass das erste Teil (8) und das zweite Teil (10) über eine Motoranschlussleitung miteinander verbunden sind.
